# EUROPEAN PATENT APPLICATION

(11) **EP 2 730 163 A1**
(43) Date of publication of application: **14.05.2014**
(21) Application number: 13192616.4
(22) Date of filing: 13.11.2013
(51) Int. Cl.: A01K 15/02

(54) **Agility hurdle**

(30) Priority: 13.11.2012 FI 20124237 U
(71) Applicant: Agimet Oy, 90310 Oulu (FI)
(72) Inventor: Sirviö, Jari, 90310 Oulu (FI)
(74) Representative: Määttä, Jukka Tapani

(57) **Abstract**

The agility hurdle (1) according to invention comprises a sensor arrangement (4) comprising capacitive measurement sensors that the dog must touch with its paws to perform validly in competition. The zone or zones can be provided with one or more capacitive measurement sensors. The geometric shape of the capacitive measurement sensors of the sensor arrangement (4) can be chosen to also allow the location of the contact by the dog's paw to be measured accurately.

## Description

The invention relates to an agility hurdle with a contact sensing arrangement.

### Prior art

Dog agility stands or hurdles define zones that the dog must touch with its paw in competition. In general, it is up to the judge to determine by eye whether a contact has occurred or not. Judges make mistakes because they have to make an interpretation of the visual observation of the contact very quickly. Therefore, it would be desirable to be able to reliably determine any contact by means of an appropriate technical device.

Such devices are already disclosed in given publications. GB 2 383 250 describes a solution for sensing a movement caused by a contact-induced pressure between two members, such as boards. The sensing is done, for instance, by a switch producing a light, sound or some other signal.

US 2008/0117062 A1 includes a very generally defined solution wherein a sensor senses an electrical characteristic indicative of a physical contact. The sensing is done and a notification thereof is provided electronically. As sensor examples, structures consisting of conductive and isolating layers wherein the contact-induced pressure changes either the resistance or the capacitance, are presented. The pressure causes, for example, a contact between the poles of a switch, a change in the conductivity of signal or ground leads, or a change in the capacitance between a conductive layer and the ground.

One of the problems related to these known solutions is that there are huge weight differences between dogs. A sensor set to sense the weight of a large dog does not sense a contact made by a small or light-weight dog. On the other hand, the movements of a large dog cause vibration and hits on the stand or hurdle which a device adjusted sensitive enough may sense as a contact.

### Objects of the invention

The object of the invention is to present an agility stand solution based on capacitive contact sensing and capable of eliminating the above-mentioned problems.

The objects of the invention are achieved by means of a sensor arrangement provided in the agility stand and including electronic sensor electrodes sensing capacitance changes, to give an indication when they sense a contact and to transmit their measurement results with time stamps either to an indicator included in the agility stand or to a data-processing equipment used by the judge.

An advantage of the method according to the invention is that no pressure measurement is needed for contact indication. Contacts made by dogs of all weights can be indicated using only one device, without any separate calibration.

A further advantage is that it does not include any wear or fatigue sensitive, movable parts.

A further advantage is that the results of each dog can also be checked afterwards, either on the indicator or data-processing equipment to which the contact-indicating signals have been transmitted or on which they have been stored.

A further advantage is that the structure of the contact sensor does not require any separate calibration if the environmental conditions change.

The invention has still the further advantage that the measuring device according to the invention also is useful when training the dog because it allows the trainer to know whether the dog performs the hurdle in such a way that the trainer can expect a contact fault free competition walk.

The contact indicating arrangement is characterized in what is set forth in the independent claim.

The dependent claims describe advantageous embodiments of the invention.

The basic idea of the invention is as follows: the surface of an agility apparatus is equipped with capacitive measuring sensors in those parts that the dog must touch with its paws to perform validly in competition. The zone or zones can be provided with one or more capacitive sensors. The geometric shape of the capacitive sensors may advantageously be chosen to also allow the location of the contact by the dog's paw to be measured accurately.

The invention will be described in more detail in the following. The description refers to the accompanying drawings wherein
figure 1 shows an example of an agility stand in which the contact indicating arrangement according to the invention is applicable,
figure 2a is a top view of an advantageous capacitive sensor layout in the agility stand of figure 1,
figure 2b shows an exemplary capacitive contact sensor usable in the contact indicating arrangement according to the invention; and
figure 3 is a section view of the capacitive contact sensor in an agility stand.

The embodiments included in the following description are only exemplary, and a person skilled in the art may implement the basic idea of the invention in some other way than by following the description. Although the description may contain many references to an embodiment or embodiments, this does not mean that any reference only refers to one illustrated embodiment, or that the described feature only is usable in one illustrated embodiment. It is possible to combine individual features of two or more embodiments and to create new embodiments of the invention by doing so.

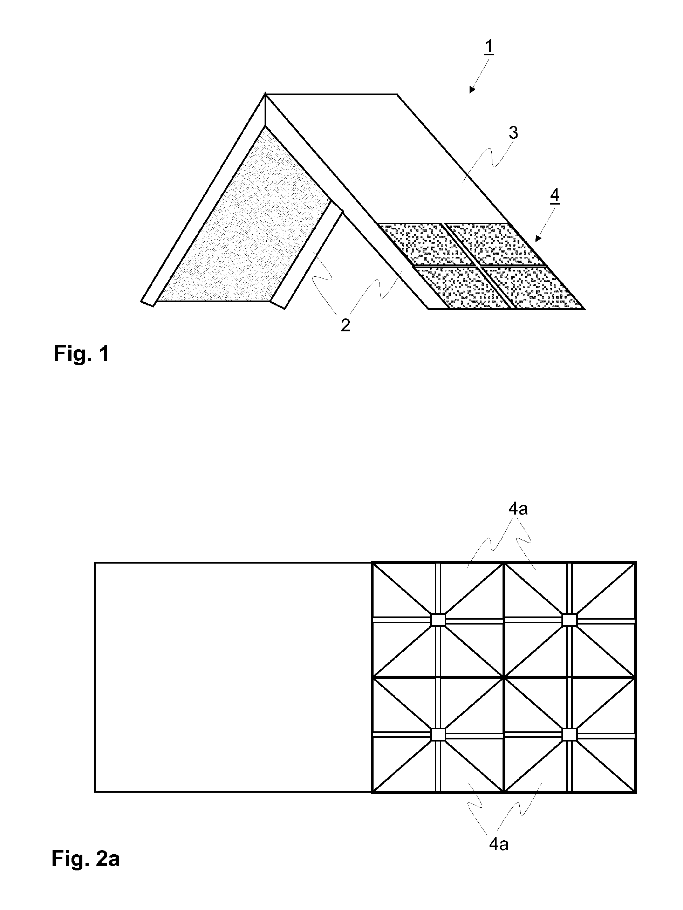

**Figure 1** shows an agility hurdle according to the invention. The agility hurdle 1 of figure 1 is an A-frame which the dog must perform in competition in such a way its paws touch a designated zone of a sensor arrangement 4 included in the agility hurdle 1. Figure 1 shows an exemplary sensor arrangement 4 contact zone onto which the dog must place its paws to perform it fault-free. It is also possible to provide a similar contact zone on the other side of the hurdle (on the backside not shown in figure 1), or on either side or on both sides of the ramp 3 in the longitudinal direction.

The framework 2 and the planar ramp 3 of the agility hurdle 1 are made of any suitable material. They can be made of metal, plastic or wood, for instance. The agility hurdle 1 can advantageously be made of a coated material having a friction coefficient high enough to always result in a firm grip with the dog's paws.

In the agility hurdle 1 according to the invention, the contact sensing is implemented using capacitive sensors. Figure 1 shows an exemplary sensor arrangement 4 wherein four exemplary capacitive sensors (reference numerals 4a in figure 2a) are installed on that side of the agility hurdle 1 on which the dog ascends the hurdle in competition. The sensor arrangement 4 is advantageously glued to the upper face of the ramp 3 of the hurdle. Each of the capacitive sensors 4a of the sensor arrangement 4 has its own electronic unit which is connected to at least one capacitive sensing element. Besides, there is an electric connection to each of the capacitive sensors 4a to supply an operating voltage to the electronic unit of the capacitive sensor. In an advantageous embodiment of the invention, each of the capacitive sensors 4a has a fixed data transfer connection to the electric detector of the sensor arrangement 4 (not shown in figure 1).

The capacitive sensor arrangement 4 is advantageously a single integrated entity having several separate capacitive sensors 4a fixed onto an appropriate support material. Besides, the support material advantageously comprises electrical couplings from the sensing arrangement's operating voltage source to each capacitive sensor's 4a electronic unit.

The capacitive sensors 4a can advantageously be coated with a wear layer protecting the sensors. The wear layer can be fixed by gluing it onto the sensors 4, for example. The wear layer is made of a material having a high friction coefficient with the paws of a dog.

In competition, when a dog reaches or leaves the hurdle, its paw causes a capacitance change in that capacitive sensing element of the capacitive sensor 4a of the sensor arrangement 4 that the paw has touched. The electronic unit of the capacitive sensor 4a indicates the capacitance change with one or more of its capacitive sensing elements and transmits the capacitance change information, advantageously over a radio network or a cable, to the data-processing equipment of the judges of the competition, for instance (not shown in Figure 1). The change information advantageously includes information on the location of the contact and on the duration of the contact.

The data-processing equipment of the judges stores all the contact information that it has received. This information can be used afterwards to check whether the dog has performed the hurdle validly.

In another advantageous embodiment of the invention, the contact point information is transmitted to an indicator device coupled to the agility hurdle and allowing a light and/or sound signal to be given upon contact.

The indicating solution according to the invention has the technical advantage that it is the relative proximity of the paw to the capacitive sensing element that causes the capacitive change. Thus, the weight of the dog is irrelevant to the contact indication. In the contact sensor arrangement according to the invention, both a small dog and a large dog cause a substantially similar contact indication.

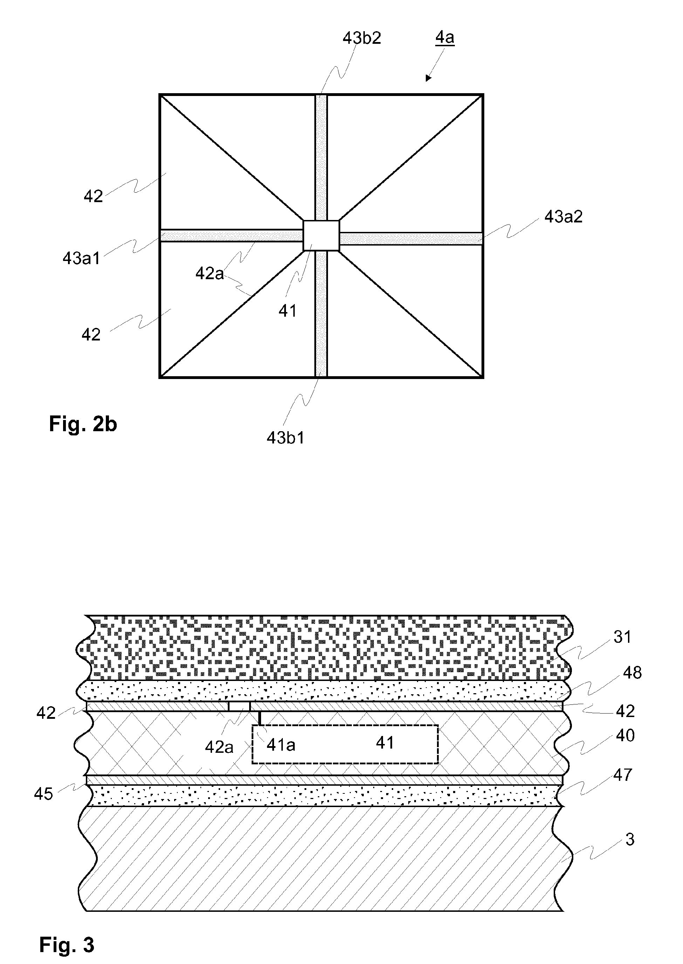

**Figure 2a** shows an example of how the contact zone of the agility hurdle 1 is implemented by means of four capacitive sensors 4a. All the four capacitive sensors 4a are advantageously integrated as a single sensor arrangement 4 on the same support material. Each of the four capacitive sensors 4a of the example shown in figure 2a comprises eight separate capacitive sensing elements (reference numerals 42 in figure 2b). The exemplary capacitive sensing elements are triangular in figure 2a. The arrangement shown in figure 2a is thus capable of sensing thirty two separate contact zones on the agility hurdle 1, if required.

The appearance of the capacitive sensing elements of the capacitive sensors 4a of the example shown in figure 2a is only exemplary. The geometric shape and number of the capacitive sensing elements can be chosen to meet any application-specific requirements.

**Figure 2b** shows the main parts of one capacitive sensor 4a. An electronic unit 41 is provided in the middle of the capacitive sensor 4a. It is supplied with operating voltage from an external voltage source (not shown in figure 2b). The direct voltage used is in the range of +5 V to +12 V. The operating voltage can be supplied from the voltage source, advantageously through an open area, referred to by reference numerals 43a1, 43a2, 43b1 and 43b2 and left between the capacitive sensing elements 42, to the electronic unit 41 by means of leads. Said open areas can be used to convey the operating voltage from one electronic unit 41 to the electronic unit 41 of an adjacent capacitive sensor.

The electronic unit 41 of the capacitive sensor 4a measures the capacitance in each of its capacitive sensing elements 42 several times a second. The measurement frequency can advantageously be ten times a second. The electronic unit 41 transmits the measurement results to the central unit of the system (not shown in figure 2b). The transmission frequency can be 868 MHz, for example, and the maximum transmission range in open air is 50 meters.

In an advantageous embodiment of the invention, cabling installed in the capacitive sensor 4a is used for the data transfer from the electronic unit to the central unit.

The capacitive sensing elements 42 shown in figure 2b are made of a very conductive material. The capacitive sensing elements 42 can be implemented, for example, using a tin-coated copper foil fixed onto a polyester weave having a thickness of approximately 3.5 mm, and a weight of 450 g/m², and serving as a body material. The weight of the copper foil is advantageously about 40 g/m². The capacitive sensing elements 42 of one capacitive sensor 4a are electrically separated from each other. In the example shown in figure 2b, reference numerals 42a refer to the electrical separation of two capacitive sensing elements 42a, consisting of an uncoated area, for example. In the example shown in figure 2b, one capacitive sensor 4a has eight independent sensing elements separated from each other. However, the invention is not limited to the geometric shapes or the number of the capacitive sensing elements 42 of figure 2b. The shape and number of capacitive sensing elements 42 included in one capacitive sensor 4a can be chosen to meet any application-specific requirements.

A grounded protective metal foil covering the entire area of the capacitive sensor 4a is provided under the body material 40. It is advantageously an aluminum foil having a thickness of 0.03 mm (reference numeral 45 in figure 3). Advantageously, the metal foil can also serve as a grounding point for the electronic unit 41.

**Figure 3** is a section view of a capacitive sensor 4a installed on the upper face of the ramp 3 of the agility hurdle 1. Advantageously, a layer of glue 47 is used for fixing the capacitive sensor 4a to the upper face of the ramp 3. The capacitive sensor 4a advantageously comprises a protective metal foil 45 laminated on the lower side of the body material 40 of the capacitive sensor 4a. The protective foil 45 is advantageously an aluminum foil whose thickness is approximately 0.03 mm.

Because the polyester weave constituting the body material 40 is elastic, the electronic unit 41 of the capacitive sensor 4a can be embedded into the body material 40 at least partially. The capacitive sensing elements 42, advantageously implemented with a laminated metal foil, are fixed to the upper face of the body material 40. The metal foil is a tin-coated copper foil, for example. Reference numeral 41 a refers to an electrical coupling that couples one electrical connector of the electronic unit 41 to one exemplary capacitive sensing element 42 of the capacitive sensor 4a. In the figure, reference numeral 42a refers to a non-conductive area created between two capacitive sensing elements. The non-conductive area is created by removing the metal foil from the area indicated by reference numeral 42a.

In the sensing arrangement of the agility hurdle according to the invention, a wear face 31 is fixed onto the capacitive sensing elements 42, advantageously using a layer of glue 48. The wear face 31 can be made of high-friction plastic or rubber, for example.

In an advantageous embodiment of the invention, the capacitive sensor arrangement is fixed, as an insert, to an existing agility hurdle by means of temporary mechanical fixings.

The capacitive sensors 4a shown in figures 1 to 3 can be made of SensFloor^{®} sensor mat manufactured by Future-Shape GmbH, for example.

The above describes advantageous embodiments of the agility hurdle according to the invention. The invention is not limited to the described solutions but the inventive idea is applicable in a number of ways within the scope of the claims.

## Claims

1. An agility hurdle (1) comprising means (4) for sensing a contact by a dog's paw, **characterized in that** the contact sensing means comprise at least one capacitive sensor (4a) comprising an electronic central unit (41) and at least one capacitive sensing element (42) which is electrically connected to the electronic central unit (41) and a capacitance change of which is configured to indicate a contact by a dog's paw with the agility hurdle (1) within a required area in competition.

2. The agility hurdle according to claim 1, **characterized in that** the central unit (41) of the capacitive sensor (4a) is configured to measure a capacitance of each of its capacitive sensing elements (42) several times a second.

3. The agility hurdle according to claim 2, **characterized in that** the electronic central unit (41) comprises means for determining an indicated location of a contact and a duration of the contact from measurement results of its capacitive sensing elements (42).

4. The agility hurdle according to claim 3, **characterized in that** the electronic central unit (41) comprises means for conveying the indicated contact point information to an external data-processing equipment for presentation and/or storage.

5. The agility hurdle according to claim 1, **characterized in that** the capacitive sensors (4a) are either glued to the upper face of the ramp (3) of the agility hurdle (1) or fixed thereto by means of mechanical means, and **in that** the capacitive sensors (4a) are coated with a material (31) having a high friction coefficient.
